# EUROPÄISCHE PATENTSCHRIFT

(11) **EP 1 527 547 B1**
(45) Veröffentlichungstag und Bekanntmachung des Hinweises auf die Patenterteilung: **03.07.2013**
(21) Anmeldenummer: 03787684.4
(22) Anmeldetag: 21.07.2003
(51) Int. Cl.: H04L 1/18

(54) **VERFAHREN UND VORRICHTUNG ZUR ÜBERWACHUNG EINER DATEN ÜBERTRAGUNG**
METHOD AND DEVICE FOR MONITORING A DATA TRANSMISSION
PROCEDE ET DISPOSITIF DE CONTROLE DE TRANSMISSION DE DONNEES

(30) Priorität: 26.07.2002 DE 10234348
(43) Veröffentlichungstag der Anmeldung: 04.05.2005
(73) Patentinhaber: ROBERT BOSCH GMBH, 70442 Stuttgart (DE)
(72) Erfinder: RODE, Detlef, 30966 Hemmingen (DE); ZURMUEHL, Uwe, 31180 Giesen (DE)
(86) Internationale Anmeldenummer: PCT/DE2003/002426
(87) Internationale Veröffentlichungsnummer: WO 2004/017556

(56) Entgegenhaltungen:
- WO-A-00/21231
- US-A1- 2002 015 408
- BETTENDORF D., HANEY R., TAYLOR D.: "Requirements Analysis document; Onboard Diagnostics System; Diagnostics II" REQUIREMENTS ANALYSIS DOCUMENT, [Online] 25. Oktober 2000 (2000-10-25), XP002258201 Gefunden im Internet: <URL:http://www.google.de/search?q=cache:N V7Rept4wnEJ:www.cse.msu.edu/~cse470/F2000/ cheng/Projects/F00-Cheng/diagnostics/diagn ostics2/web/documents/reqdoc/+requirements +analysis+document+bettendorf&hl=de&ie=UTF -8> [gefunden am 2003-10-17]
- BRIDAL O ET AL: "On the design of communication protocols for safety-critical automotive applications" VEHICULAR TECHNOLOGY CONFERENCE, 1994 IEEE 44TH STOCKHOLM, SWEDEN 8-10 JUNE 1994, NEW YORK, NY, USA,IEEE, 8. Juni 1994 (1994-06-08), Seiten 1098-1102, XP010123245 ISBN: 0-7803-1927-3
- ISO/TC 22/SC 3: "Draft International Standard ISO/DIS 15765-2.2 (15765-2.4): Road Vehicles - Diagnostics on Controller Area Networks (CAN)- Part 2: Network layer services" 2003 , ISO , GENEVA XP002261328 Absätze [07.1]-[07.7]

## Beschreibung

### Stand der Technik

Die Erfindung betrifft ein Verfahren und eine Vorrichtung zur Überwachung einer Datenübertragung zwischen wenigstens zwei Teilnehmern eines Netzwerks gemäß den Oberbegriffen der unabhängigen Ansprüche.

Verfahren zur Datenübertragung, insbesondere die entsprechenden Übertragungsprotokolle, werden überall dort eingesetzt, wo große Datenmengen in kleinen Paketen, im weiteren als Nachrichten bezeichnet, gesichert übertragen werden sollen. Beispielsweise erlaubt ein CAN-Telegramm (CAN: controller area network) die Übertragung von einer bestimmten Anzahl Nutzbytes. Sollen größere Pakete bzw. Datenmengen verschickt werden, so muss ein Übertragungsprotokoll für die Segmentierung beim Sender bzw. Assemblierung beim Empfänger eingesetzt werden.

Insbesondere für Diagnose-Anwendungen hat die ISO (International Standartisation Organisation) den Standart 15765 herausgegeben. Im zweiten Teil des Standards der ISO 15765-2 ist ein Übertragungsprotokoll spezifiziert, bei welchem keine Bestätigung der übermittelten Nachrichten im Rahmen einer Datenübertragung erfolgt. Dies liegt auch darin begründet, dass bei verschiedenen Anwendungen, insbesondere in der Automobilindustrie, Daten oder Nachrichten mit bestimmten Informationen zyklisch versandt werden. Gehen dabei Daten, insbesondere eine Nachricht, verloren, so erfolgt die Synchronisation auf diese verlorengegangenen Daten eben bei der nächsten Nachricht.

Werden Nachrichten jedoch ereignisorientiert übermittelt, so ist eine fehlende Bestätigung der Nachricht nicht akzeptabel.

Mögliche Lösungen für das Problem der fehlenden Bestätigung, insbesondere in CANbasierten Systemen, sind zum Einen dadurch gegeben, dass ein eigens dafür vorgesehenes Übertragungsprotokoll verwendet wird, das allerdings dann den Nachteil besitzt, nicht kompatibel zu den von einer Vielzahl von Applikationen geforderten Protokollen, insbesondere im Rahmen der Diagnose im Kraftfahrzeug zu sein oder dass die geforderte Bestätigung auf höheren Protokollschichten, einem sogenannten zusätzlichen Security-Layer durchgeführt wird, wodurch sich nachteiliger Weise ein wesentlich höherer Aufwand bei höherer Fehleranfälligkeit sowie eine größere Ineffektivität, insbesondere durch eine erhöhte Buslast ergibt.

Damit ist es Aufgabe der Erfindung, ein bestehendes Übertragungsprotokoll, welches hochkompatibel zu sehr vielen Anwendungen ist, insbesondere ein Übertragungsprotokoll gemäß des ISO-Standards 15765-2 dahingehend zu erweitern, dass das Protokoll selbst nicht maßgeblich verändert wird und zum Anderen eine Bestätigung der Nachrichten, obwohl diese in dem Protokoll nicht vorgesehen sind, ermöglicht wird.

### Vorteile der Erfindung

Zur Lösung dieser Aufgabe zeigt die Erfindung ein Verfahren, ein Computer programm und eine Vorrichtung zur Überwachung einer Datenübertragung zwischen wenigstens zwei Teilnehmern eines Netzwerks, wobei wenigstens ein Sensor an einen wenigstens einen Empfänger Daten in Form von Nachrichten überträgt, wobei eine Datenübertragung durch wenigstens eine Nachricht erfolgt und der Empfänger an den Sender dann wenigstens einen Flusskontrollblock überträgt, wenn die Daten einer Datenübertragung separiert in einer ersten Nachricht und wenigstens einer folgenden Nachricht übertragen werden, wobei nach der letzten Nachricht einer Datenübertragung ein zusätzlicher Flusskontrollblock zur Bestätigung dieser Datenübertragung vom Empfänger zum Sender übertragen wird wobei zwischen zwei Arten von Flusskontrollblöcken unterschieden wird, wobei ein unter Flusskontrollblock (FC.CTS) als positive Bestätigung verwendet wird und ein zweiter Flusskontrollblock (FC.WAIT) als negative Bestätigung.

Vorteilhafter Weise erfolgt die Datenübertragung gemäß dem Protokoll nach ISO 15765-2.

D. h. der Vorteil des beschriebenen Verfahrens und der beschriebenen Vorrichtung liegt in der kompatiblen Erweiterung eines bestehenden Protokolls, insbesondere des ISO-Standards 15765-2, ohne dass insbesondere diese ISO-Norm maßgeblich verändert wird, also beispielsweise keine neuen oder veränderten Nachrichten, insbesondere Protokoll-Kontrollinformationen (protocol control information) eingeführt werden.

So wird vorteilhafter Weise mit wenig Aufwand ein bestätigter Kommunikationsdienst bzw. eine bestätigte Datenübertragung erreicht.

Zweckmäßiger Weise können dann Empfänger mit einer reinen Implementierung des bekannten Protokolls, insbesondere also mit reiner ISO-Implementierung, die als Beobachter fungieren (Tooling) ohne Probleme weiter im Rahmen der beschriebenen Protokollerweiterung im Netzwerk betrieben werden können.

Vorteilhafter Weise wird somit im Rahmen der ISO 15765-2-Norm eine Quittierung einer Datenübertragung durch Übermittlung eines zusätzlichen Flow-Controll-Telegramms FC nach der letzten Nachricht einer Datenübertragung ermöglicht.

Weiterhin von Vorteil ist, dass der Sender überprüft, ob in einer vorgebbaren ersten Zeitspanne N_Bs_Timeout nach Senden wenigstens einer Nachricht ein Flusskontrollblock eingeht und der Sender im Fehlerfall die zuletzt gesendete Nachricht oder alle zuletzt gesendeten Nachrichten einer Datenübertragung wiederholt.

Ebenso zweckmäßig ist, dass der Sender überprüft, ob der Empfänger in einer bestätigten Betriebsart, also mit Aussenden des Flusskontrollblocks am Ende der Datenübertragung betrieben werden kann, indem der Sender eine einzelne Testnachricht sendet und das Eingehen des Flusskontrollblocks als Bestätigung überprüft.

Dabei können dann zweckmäßiger Weise zwei Betriebsarten unterschieden werden, wobei eine erste Betriebsart die Übertragung des zusätzlichen Flusskontrollblocks nach der letzten Nachricht einer Datenübertragung vom Empfänger zum Sender erlaubt und eine zweite Betriebsart dies nicht gestattet, wobei bei Empfang des Flusskontroliblocks nach der Testnachricht beim Sender diese in der ersten Betriebsart betrieben wird und im anderen Fall auf die zweite Betriebsart umgeschaltet wird.

Dabei kann in einer besonderen Ausführungsform zweckmäßiger Weise zusätzlich überprüft werden, ob der Flusskontrollblock nach der Testnachricht innerhalb einer vorgebbaren zweiten Zeitspanne N_Bs_Timeout 2 beim Sender eingeht.

In einer besonderen Ausgestaltung sind die erste und zweite Zeitspanne gleich (N_Bs_Timeout = N_Bs_Timeout 2).

Eine besonders vorteilhafte Realisierung und Anwendung der Erfindung besteht in der Verwendung eines Computerprogramms auf einem Datenträger, welches zur Anwendung eines erfindungsgemäßen Verfahrens dient.

Durch die im Weiteren beschriebene Erfindung ergibt sich somit eine sehr effiziente Steigerung der Sicherheit im Netzwerk, da zum Einen das Netzwerk in einer bestätigten Betriebsart betrieben werden kann, zum Anderen ein bereits bekanntes hochkompatibles Übertragungsprotokoll, insbesondere das ISO 15765-2 eingesetzt werden kann und gleichzeitig Netzwerkeilnehmer, die die erfindungsgemäße Erweiterung zu dem Standardprotokoll nicht enthalten, weiterhin im bestehenden Netzwerk betrieben werden können.

Weiter Vorteile und vorteilhafte Ausgestaltungen ergeben sich aus der Beschreibung sowie den Merkmalen der Ansprüche.

### Zeichnung

Die Erfindung wird im Weiteren anhand der in der Zeichnung dargestellten Figuren näher erläutert.

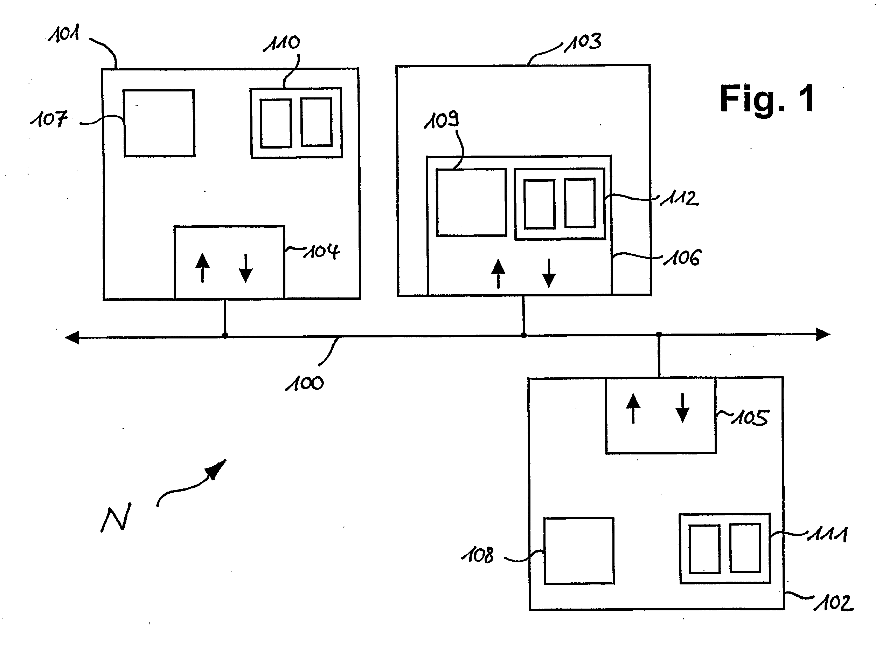

Dabei zeigt Figur 1 ein Netzwerk oder Bussystem mit wenigstens zwei Teilnehmern im Rahmen der zu überwachenden Datenübertragung.

Figur 2 zeigt ein erstes Flussdiagramm im Rahmen einer Nachrichtenbestätigung bei einer Einzelnachricht.

In Figur 3 ist ein zweites Flussdiagramm mit negativer Nachrichtenbestätigung bei einer Einzelnachricht dargestellt, also bei erkanntem Fehler.

Figur 4 zeigt ein besonderes Ausführungsbeispiel bei einer Einzelnachricht mit Timeout.

Figur 5 zeigt in einem vierten Flussdiagramm die Nachrichtenbestätigung bei separierter Datenübertragung.

### Beschreibung der Ausführungsbeispiele

Figur 1 zeigt ein Netzwerk N mit einer Busverbindung 100 und wenigstens zwei Teilnehmern 101 und 102. Weitere Teilnehmer wie hier 103 sind optional, aber selbstverständlich erfindungsgemäß denkbar. Bei dem Netzwerk bzw. Bussystem handelt es sich insbesondere entsprechend der ISO 15765-2 beispielsweise um ein CAN-System, insbesondere in einem Fahrzeug. Weitere Anwendungen, insbesondere im Werkzeugmaschinenbereich oder im Industrie- sowie Gebrauchsgüterbereich sind ebenso wie andere Bussysteme selbstverständlich denkbar.

Als Übertragungsprotokoll wird im Weiteren von besagter ISO 15765-2 insbesondere der ISO/DIS 157652-2 ausgegangen, Stand 30.11.1999 (ISO/TC 22/SC 3/WG 1/TF 2 N 124). Dabei ist aber jedes weitere Protokoll, das die erfindungsgemäß genutzten Eigenschaften dieser ISO-Norm erfüllt und keinen bestätigten Dienst anbietet, denkbar.

Die Busteilnehmer im Beispiel in Figur 1 enthalten eine Busschnittstelle 104, 105 bzw. 106 sowie Verarbeitungseinheiten 107, 108 und 109 sowie Speicherelemente 110, 111 bzw. 112. Diese Verarbeitungseinheiten bzw. Speicherelemente können einerseits im Teilnehmer selbst untergebracht sein wie in 101 und 102 dargestellt oder auch in die Schnittstelleneinheit integriert sein gemäß Teilnehmer 103. Die Abarbeitung erfindungsgemäßer Verfahren erfolgt dabei eben durch die Verarbeitungseinheiten, insbesondere in Verbindung mit den Speicherelementen, beispielsweise zur Aufnahme eines entsprechenden Programms. Dabei kann ein erfindungsgemäßes Computerprogramm zum Einen in den in Figur 1 dargestellten Speicherelementen abgelegt sein oder aber auch, insbesondere bevor es darin realisiert ist, auf anderen Datenträgern lokalisiert sein. Dabei sind alle denkbaren Datenträger ebenso wie eine Übertragung, beispielsweise via Internet, erfindungsgemäß einsetzbar.

Der Kern der Erfindung basiert auf der besonderen Benutzung einer Flusskontrollnachricht, also des Flusskontrolltelegramms FC der besagten ISO-Norm. Ein Flusskontrollblock FC wird gemäß des hier beschriebenen erfindungsgemäßen Verfahrens zusätzlich am Ende einer jeden Übertragung vom Empfänger der Nachricht an den Sender übermittelt. Dabei ist beispielsweise Teilnehmer 101 als Sender und Teilnehmer 102 als Empfänger bezüglich einer beispielhaften Datenübertragung vorgesehen. Selbstverständlich kann jeder Teilnehmer insbesondere im Rahmen eines CAN-Systems sowohl Sender als auch Empfänger sein. Auch eine Festlegung, welcher Teilnehmer als Sender und welcher Teilnehmer als Empfänger fungiert, ist erfindungsgemäß denkbar. Diese standardgemäßen Flow-Control-Blocks FC werden erfmdungsgemäß dann als positive oder negative Bestätigung der gesamten Datenübertragung, also aller mit der Datenübertragung zusammenhängenden Nachrichten wie folgt interpretiert: Die Flusskontrollblöcke FC können in zwei Arten unterschieden werden: Den FC.CTS (flow status is continued to send) sowie den FC.WAIT (flow status is wait). Dabei wird erfmdungsgemäß der FC.CTS als positive Bestätigung eingesetzt, also als Quittierung einer fehlerfreien Übertragung und der FC.WAIT als negative Bestätigung, also als Anzeige für einen Übertragungsfehler. Dabei ist diese Festlegung nach der Sinnhaftigkeit getroffen. Denkbar wäre aber auch der umgekehrte Einsatz der beiden Arten von Flusskontrollblöcken.

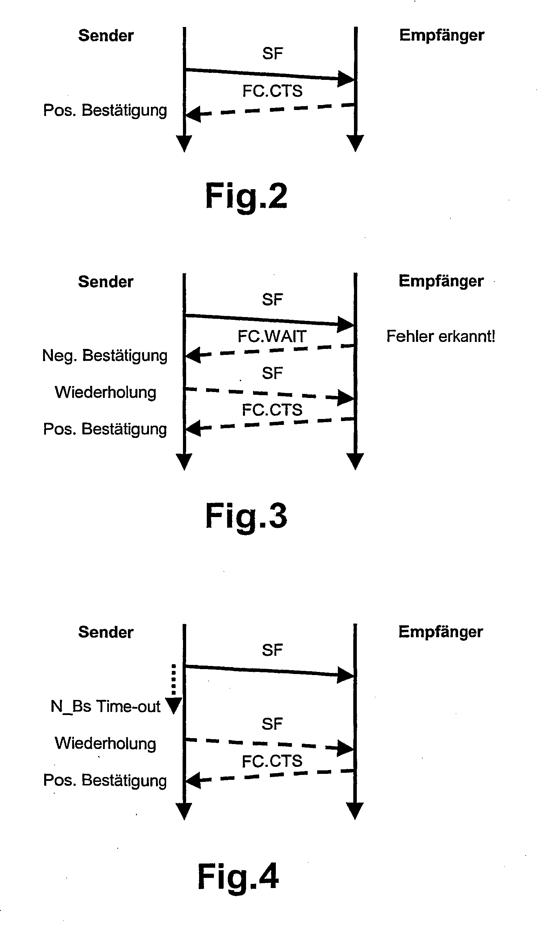

Anhand der nun nachfolgenden Figuren 2 bis 5 werden nun in Form von Flussdiagrammen bzw. Sequenzdiagrammen erfindungsgemäße Beispiele dargestellt. In der folgenden Beschreibung werden die Abkürzungen gemäß der ISO/DIS 15765-2 verwendet. Dabei bedeutet
SF: single frame, eine einzelne Nachricht,
FC: flow control, den Flusskontrollblock
FC.CTS: flow control (continue to send) als positive Bestätigung,
FC.WAIT: flow control (wait) als negative Bestätigung,
FF: first frame als erste Nachricht bei wenigstens zwei Nachrichten einer Datenübertragung,
CF: consicutive frame als nachfolgende Nachricht einer Datenübertragung mit wenigstens zwei Nachrichten,
LCF: last consicutive frame als letzte nachfolgende Nachricht und
N_Bs: network lyer timing parameter Bs, also die Zeit bis zum nächsten FC-Empfang.

Die Erweiterungen des hier erfindungsgemäß beschriebenen Verfahrens gegenüber dem Standardprotokoll sind gestrichelt dargestellt. Aus Gründen der Übersichtlichkeit ist der Timer N_Bs lediglich an der Stelle eingezeichnet, die für die Erläuterung einer Fehlererkennung wichtig ist. Dies ist in Figur 4.

Generell wird also sowohl der Fall von kurzen Datenübertragungen, bei denen nur eine Nachricht SF ausgesendet werden muss als auch der von langen Datenübertragungen mit mehreren Nachrichten FF und CF abgedeckt. Das erfindungsgemäße Grundprinzip ist dabei das selbe: Nach Erhalt des jeweils letzten Datentelegramms SF oder LCF sendet der Empfänger einen zusätzlichen Flusskontrollblock FC aus. Dabei ist wichtig, dass sich dieser Flusskontrollblock FC vom Format her exakt nach der ISO-Spezifikation richtet. Lediglich die Interpretation der Flusskontrollblöcke erfährt eine Erweiterung: Ein FC.CTS wird vom Sender als positive Quittierung bewertet und ein FC.WAIT dagegen als negative.

Das Flussdiagramm bzw. die Sequenz in Figur 2 zeigt die Nachrichtenabfolge bei einer kurzen Datenübertragung, d. h. einer unsegmentierten Datenübertragung, also einer einzelnen Nachricht SF im fehlerfreien Fall. D. h. der Sender, insbesondere Teilnehmer 101, sendet eine Nachricht SF an den Empfänger, hier insbesondere Teilnehmer 102. Nachdem der Empfänger das SF-Telegramm, also die einzelne Nachricht erhalten hat, sendet er zur positiven Bestätigung in diesem Gutfall ein FC.CTS-Telegramm, also den entsprechenden Flusskontrollblock an den Sender. Dieser erhält damit als Erweiterung gegenüber dem ISO-Protokoll eine Bestätigung der einzelnen Nachricht SF.

Figur 2 zeigt ein Flussdiagramm bzw. eine Sequenz, die der aus Figur 1 entspricht, mit dem Unterschied, dass der Empfänger einen Fehler beim Empfang der einzelnen Nachricht, also des SF-Telegramms feststellt. Bei bzw. nach erkanntem Fehler schicht der Empfänger dem Sender eine negative Bestätigung, also hier den Flusskontrollblock FC.WAIT. Als Fehlerreaktion kann dann der Sender seine Einzelnachricht, also sein SF-Telegramm wiederholen und hat dann, wie hier beispielhaft dargestellt, bei diesem Mal Erfolg, was sich in der positiven Bestätigung durch den Flusskontrollblock FC.CTS vom Empfänger an den Sender widerspiegelt.

Ein besonderer Fall ist nun in Figur 4 dargestellt. In diesem Flussdiagramm bzw. dieser Sequenz wird nun ein Fall behandelt, dass der Empfänger fehlerhafter Weise keinen Flusskontrollblock, also kein FC-Telegramm als Quittung sendet, beispielsweise weil die Einzelnachricht SF bei der Übermittlung verlorengegangen ist. Auch dieser Fall kann durch eine besondere Ausgestaltung erkannt werden, und zwar durch eine senderseitige Überwachung einer ersten Zeitspanne. Dabei kann der in dem ISO-Standard vorgesehene Timer N_Bs verwendet werden, der immer dann gestartet wird, wenn auf einen Flusskontrollblock gewartet werden muss. Zweckmäßiger Weise wird dabei an dieser Stelle exakt der gleiche Timer N_Bs verwendet, und die Zeitspanne N_Bs Timeout durch den Sender überwacht. Erfindungsgemäß ist aber auch denkbar, einen anderen Timer oder eine andere Zeitspanne einzusetzen, wobei die Verwendung von N_Bs den Vorteil hat, auch hier die Anpassung des bestehenden Protokolls zu minimieren. Als Reaktion auf den Ablauf der Zeitspanne N_Bs Timeout erfolgt als Fehlerreaktion die Wiederholung der Einzelnachricht SF, was dann wiederum beispielsweise in einer positiven Bestätigung mit FC.CTS mündet. Selbstverständlich sind auch Kombinationen aller erfindungsgemäß dargestellten Sequenzen mit erkannten Fehler, ohne erkanntem Fehler, mit Timeout, ohne Timeout usw. möglich und erfindungsgemäß abgedeckt.

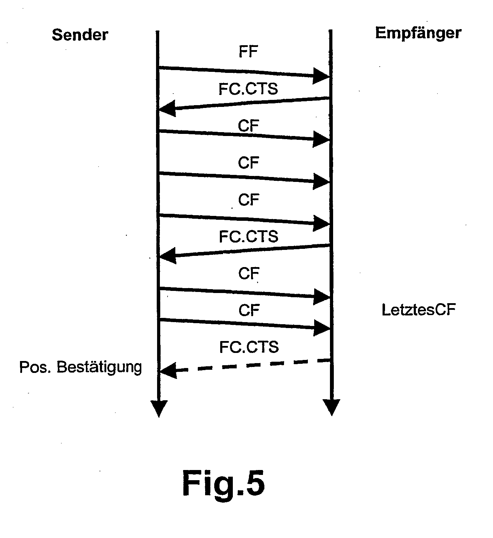

In Figur 5 schließlich ist im Flussdiagramm bzw. der Sequenz nur eine lange Datenübertragung, d. h. eine segmentierte Datenübertragung dargestellt. Bei einer solchen segmentierten Datenübertragung, also bei Einsatz einer ersten Nachricht FF und weiteren nachfolgenden Nachrichten CF wird zunächst der Flusskontrollblock standardgemäß eingesetzt und nach der ersten Nachricht FF ein FC-TF gesendet, welches beispielsweise gemäß ISO 15765-2 die Informationen Bs und STₘᵢₙ, also die Blockgröße und der Mindestabstand zwischen zwei nachfolgenden Nachrichten CF enthält. In Erweiterung des ISO-Standards wird hier lediglich nach der letzten Nachricht CF, also LCF, vom Empfänger eine positive Quittierung als Bestätigung an den Sender gesendet. Entsprechend der Figuren 3 und 4 sind die dort dargestellten Fehlerfälle hier ebenfalls möglich und handelbar. Dabei kann zwar unter Umständen nur die fehlerhafte Nachricht bzw. die Abfolge fehlerhafter Nachrichten zwischen zwei Flusskontrollblöcken wiederholt werden, aber aufgrund der Bauart des ISO-Standardprotokolls wird üblicherweise im Fehlerfall die gesamte Datenübertragung, also alle Nachrichten wiederholt.

Im Folgenden soll noch kurz auf die Kompatibilität zu rein ISO-konformen Implementierungen eingegangen werden, also Implementierungen bei einzelnen Teilnehmern, die eine Interpretierung gemäß unserer Erfindung nicht erlaubt. Das erfindungsgemäße Verfahren setzt voraus, dass sowohl der Sender durch Warten auf eine Bestätigung als Flusskontrollblock als auch der Empfänger durch Senden der Bestätigung als Flusskontrollblock modifiziert, insbesondere programmtechnisch angepasst werden müssen. D. h. aber auch, dass ein alter Sender, also ein rein isokonformer Sender mit einem neuen erfindungsgemäßen Empfänger problemlos funktionieren würde.

Problematisch wird dies, wenn ein erfindungsgemäßer Sender aber mit einem rein isokonformen Empfänger zusammenarbeitet. Insbesondere aufgrund eines Timeouts würde dies dann zu unerwünschten Wiederholungen führen. Um trotzdem Abwärtskompatibilität zu ermöglichen, kann das Verfahren in einer besonderen Ausgestaltung um einen Konfigurationslauf ergänzt werden. Dabei kann beispielsweise durch Senden einer Testnachricht des erfindungsgemäßen Senders und Überprüfen innerhalb einer vorgebbaren zweiten Zeitspanne N_Bs_Timeout 2, ob ein Flusskontrollblock zurückkommt oder nicht. Wenn ja, so kann eine erfindungsgemäße Betriebsart also mit bestätigten Diensten benutzt werden. Ansonsten muss bezüglich dieses Empfängers in die rein isokonforme Betriebsart, also ohne die Erweiterung gemäß unserer Erfindung umgeschaltet werden. Dabei sind zwei Varianten denkbar: Zum Einen, dass eben eine spezielle Testnachricht als solche erkennbar ausgesandt wird, d. h. dass der Sender dann nicht im Fehlermodus arbeitet, sondern bei Nichteingehen der Bestätigung davon ausgeht, einen rein isokonformen Empfänger vorliegen zu haben oder in einem zweiten Fall, dass eine bestimmte Zeit vorgesehen wird, in der eben nicht auf Fehler geprüft wird, sondern auf Übereinstimmung gemäß des erfindungsgemäßen Verfahrens bzw. der rein isokonformen Auslegung. Eine solche Zeit ist beispielsweise nach jedem Hochlaufen beim Aussenden der ersten Nachricht gegeben. Es kann aber auch eine andere Zeit vorgegeben werden. Zur Erhöhung der Sicherheit kann hierbei ein solcher Konfigurationslauf auch mehrfach hintereinander ausgeführt werden, um die Überschneidung eines auftretenden Fehlers im Konfigurationslauf wirkungsvoll auszuschließen bzw. zu minimieren.

Wird der Konfigurationslauf nach jedem Hochlaufen beim Aussenden der ersten Nachricht durchgeführt, so muss ein nach diesem Vorschlag erweiterter Empfänger grundsätzlich beim Starten nach dem erfindungsgemäßen Protokoll arbeiten, um dann bereits auf die erste Nachricht des Senders zu reagieren und den Flusskontrollblock als Quittung zu senden. D. h. lediglich bei der Kombination eines neuen erfindungsgemäßen Senders und eines alten rein isokonformen Empfängers ist kein Quittungsbetrieb gemäß unserer Erfindung möglich. In diesem Fall kann aber erfindungsgemäß auf das rein isokonforme Protokoll umgeschaltet werden.

Damit kann mit unserer Erfindung trotz Verwendung eines hochkompatiblen Standardprotokolls, bei dem eigentlich kein Quittungsbetrieb vorgesehen ist, ein Quittungsbetrieb eingeführt werden. Der fehlerfreie Fall oder Gutfall wird dabei anhand der positiven Bestätigung quasi sofort erkannt, d. h. es sind keine zusätzlichen Timeouts oder Ähnliches zu beachten. Daneben ist die erfindungsgemäße Implementierung sehr einfach zu erstellen, betrifft also eine relativ kleine Erweiterung der bestehenden Schicht bzw. des bestehenden Protokolls und ist deutlich weniger aufwendig als er eine eigens zur Bestätigung implementierte Protokollschicht gemäß dem anfangs erwähnten Security-Player.

## Patentansprüche

1. Verfahren zur Überwachung einer Datenübertragung zwischen wenigstens zwei Teilnehmern eines Netzwerks, wobei wenigstens ein Sender an wenigstens einen Empfänger Daten in Form von Nachrichten (SF, FF, CF) überträgt, wobei eine Datenübertragung durch wenigstens eine Nachricht (SF) erfolgt und der Empfänger an den Sender dann wenigstens einen Flusskontrollblock (FC) überträgt, wenn die Daten einer Datenübertragung separiert in einer ersten Nachricht (FF) und wenigstens einer nachfolgenden Nachricht (CF) übertragen werden, **dadurch gekennzeichnet, dass** nach der letzten Nachricht (SF, LCF) einer Datenübertragung ein zusätzlicher Flusskontrollblock (FC) zur Bestätigung dieser Datenübertragung vom Empfänger zum Sender übertragen wird,
**wobei zwischen zwei Arten von Flusskontrollblöcken unterschieden wird, wobei ein erster Flusskontrollblock (FC.CTS) als positive Bestätigung verwendet wird und ein zweiter Flusskontrollblock (FC.WAIT) als negative Bestätigung.**

2. Verfahren nach Anspruch 1, **dadurch gekennzeichnet, dass** die Datenübertragung gemäß dem Protokoll nach ISO 15765-2 abläuft.

3. Verfahren nach Anspruch 1, **dadurch gekennzeichnet, dass** der Sender überprüft, ob in einer vorgebbaren ersten Zeitspanne (N_Bs_Timeout) nach Senden wenigstens einer Nachricht ein Flusskontrollblock eingeht und der Sender im Fehlerfall die zuletzt gesendete Nachricht oder alle zuletzt gesendeten Nachrichten einer Datenübertragung wiederholt.

4. Verfahren nach Anspruch 1, **dadurch gekennzeichnet, dass** der Sender überprüft ob der Empfänger in einer bestätigten Betriebsart mit Aussenden des Flusskontrollblockes am Ende der Datenübertragung betrieben werden kann, indem der Sender eine einzelne Testnachricht (TF) sendet und das Eingehen des Flusskontrollblocks (FC) als Bestätigung überprüft.

5. Verfahren nach Anspruch 5, **dadurch gekennzeichnet, dass** zwei Betriebsarten unterschieden werden, wobei eine erste Betriebsart die Übertragung des zusätzlichen Flusskontrollblocks nach der letzten Nachricht (SF, LCF) einer Datenübertragung vom Empfänger zum Sender erlaubt und eine zweite Betriebsart dies nicht erlaubt, wobei bei Empfang des Flusskontrollblocks (FC) nach der Testnachricht (TF) beim Sender, dieser in der ersten Betriebsart arbeitet und im anderen Fall auf die zweite Betriebsart umschaltet.

6. Verfahren nach Anspruch 5, **dadurch gekennzeichnet, dass** überprüft wird, ob der Flusskontrollblock (FC) nach der Testnachricht (TF) innerhalb einer vorgebbaren zweiten Zeitspanne (N_Bs_Timeout2) beim Sender eingeht.

7. Verfahren nach Anspruch 4 und 7, **dadurch gekennzeichnet, dass** die zweite Zeitspanne (N_Bs_Timeout2) der ersten Zeitspanne (N_Bs_Timeout) entspricht.

8. Computerprogramm zur Ausführung aller Schritte des Verfahrens nach einem der Ansprüche 1 bis 7.

9. Vorrichtung zur Überwachung einer Datenübertragung zwischen wenigstens zwei Teilnehmern eines Netzwerks, mit wenigstens einem Sender und wenigstens einem Empfänger, wobei der Sender an wenigstens einen Empfänger Daten in Form von Nachrichten (SF, FF, CF) überträgt, wobei die Vorrichtung derart gestaltet ist, dass eine Datenübertragung durch wenigstens eine Nachricht (SF) erfolgt und der Empfänger an den Sender dann wenigstens einen Flusskontrollblock (FC) überträgt, wenn die Daten einer Datenübertragung separiert in einer ersten Nachricht (FF) und wenigstens einer nachfolgenden Nachricht (CF) übertragen werden, **dadurch gekennzeichnet, dass** Mittel enthalten sind, durch die nach der letzten Nachricht (SF, LCF) einer Datenübertragung ein zusätzlicher Flusskontrollblock (FC) zur Bestätigung dieser Datenübertragung vom Empfänger zum Sender übertragen wird,
**wobei zwischen zwei Arten von Flusskontrollblöcken unterschieden wird, wobei ein erster Flusskontrollblock (FC.CTS) als positive Bestätigung verwendet wird und ein zweiter Flusskontrollblock (FC.WAIT) als negative Bestätigung.**

## Claims

1. Method for monitoring a data transmission between at least two subscribers in a network, wherein at least one transmitter transmits data in the form of messages (SF, FF, CF) to at least one receiver, wherein a data transmission is effected by at least one message (SF) and the receiver transmits at least one flow control block (FC) to the transmitter when the data of a data transmission are transmitted in separated form in a first message (FF) and at least one subsequent message (CF), **characterized in that** the last message (SF, LCF) of a data transmission is followed by the transmission of an additional flow control block (FC) for confirming this data transmission from the receiver to the transmitter,
**wherein a distinction is drawn between two types of flow control blocks, a first flow control block (FC.CTS) being used as positive confirmation and a second flow control block (FC.WAIT) being used as negative confirmation.**

2. Method according to Claim 1, **characterized in that** the data transmission takes place on the basis of the protocol according to ISO 15765-2.

3. Method according to Claim 1, **characterized in that** the transmitter checks whether a flow control block arrives in a prescribable first period (N_Bs_Timeout) after at least one message is sent, and the transmitter repeats the most recently sent message or all of the most recently sent messages from a data transmission in the event of an error.

4. Method according to Claim 1, **characterized in that** the transmitter checks whether the receiver can be operated in a confirmed mode of operation involving the flow control block being sent out at the end of the data transmission by virtue of the transmitter sending a single test message (TF) and checking the arrival of the flow control block (FC) as confirmation.

5. Method according to Claim 5, **characterized in that** a distinction is drawn between modes of operation wherein a first mode of operation allows the additional flow control block to be transmitted after the last message (SF, LCF) of a data transmission from the receiver to the transmitter and a second mode of operation does not allow this, reception of the flow control block (FC) after the test message (TF) by the transmitter prompting the latter to operate in the first mode of operation, and to transmit a changing over to the second mode of operation otherwise.

6. Method according to Claim 5, **characterized in that** a check is performed to determine whether the flow control block (FC) arrives with the transmitter after the test message (TF) within a prescribable second period (N_Bs_Timeout2).

7. Method according to Claims 4 and 7, **characterized in that** the second period (N_Bs_Timeout2) corresponds to the first period (N_Bs_Timeout).

8. Computer program for executing all of the steps of the method according to one of Claims 1 to 7.

9. Apparatus for monitoring a data transmission between at least two subscribers in a network, having at least one transmitter and at least one receiver, wherein the transmitter transmits data in the form of messages (SF, FF, CF) to at least one receiver, wherein the apparatus is designed such that a data transmission is effected by at least one message (SF) and the receiver transmits at least one flow control block (FC) to the transmitter when the data of a data transmission are transmitted in separated form in a first message (FF) and at least one subsequent message (CF), **characterized in that** means are included which, after the last message (SF, LCF) of a data transmission, transmit an additional flow control block (FC) for confirming this data transmission from the receiver to the transmitter, **wherein a distinction is drawn between two types of flow control blocks, a first flow control block (FC.CTS) being used as positive confirmation and a second flow control block (FC.WAIT) being used as negative confirmation.**

## Revendications

1. Procédé pour surveiller une transmission de données entre au moins deux abonnés d'un réseau, au moins un émetteur transmettant des données à au moins un récepteur sous la forme de messages (SF, FF, CF), une transmission de données étant effectuée par au moins un message (SF) et le récepteur transmettant alors à l'émetteur au moins un bloc de contrôle de flux (FC) lorsque les données d'une transmission de données sont transmises séparément dans un premier message (FF) et au moins un message suivant (CF), **caractérisé en ce qu'**après le dernier message (SF, LCF) d'une transmission de données, un bloc de contrôle de flux (FC) supplémentaire est transmis du récepteur vers l'émetteur pour confirmer cette transmission de données, une différence étant faite entre deux types de blocs de contrôle de flux, un premier bloc de contrôle de flux (FC.CTS) étant utilisé comme confirmation positive et un deuxième bloc de contrôle de flux (FC.WAIT) étant utilisé comme confirmation négative.

2. Procédé selon la revendication 1, **caractérisé en ce que** la transmission de données se déroule conformément au protocole selon l'ISO 15765-2.

3. Procédé selon la revendication 1, **caractérisé en ce que** l'émetteur vérifie si l'arrivée d'un bloc de contrôle de flux a lieu dans un premier intervalle de temps (N_Bs_Timeout) pouvant être prédéfini après l'émission d'au moins un message et, en cas de défaut, l'émetteur répète le dernier message émis ou tous les derniers messages émis d'une transmission de données.

4. Procédé selon la revendication 1, **caractérisé en ce que** l'émetteur vérifie si le récepteur peut fonctionner dans un mode de fonctionnement confirmé avec l'émission du bloc de contrôle de flux à la fin de la transmission de données, **en ce que** l'émetteur envoie un premier message de test (TF) individuel et vérifie l'arrivée du bloc de contrôle de flux (FC) en tant que confirmation.

5. Procédé selon la revendication 5, **caractérisé en ce que** deux modes de fonctionnement sont différenciés, un premier mode de fonctionnement permettant la transmission du bloc de contrôle de flux supplémentaire après le dernier message (SF, LCF) d'une transmission de données du récepteur vers l'émetteur et un deuxième mode de fonctionnement ne le permettant pas, l'émetteur fonctionnant dans le premier mode de fonctionnement lors de la réception du bloc de contrôle de flux (FC) après le message de test (TF) sur celui-ci et basculant sur le deuxième mode de fonctionnement dans l'autre cas.

6. Procédé selon la revendication 5, **caractérisé en ce qu'**un contrôle est effectué pour vérifier si le bloc de contrôle de flux (FC) après le message de test (TF) arrive à l'émetteur au sein d'un deuxième intervalle de temps (N_Bs_Timeout2) pouvant être prédéfini.

7. Procédé selon les revendications 4 et 7, **caractérisé en ce que** le deuxième intervalle de temps (N_Bs_Timeout2) correspond au premier intervalle de temps (N_Bs_Timeout).

8. Programme informatique pour exécuter toutes les étapes du procédé selon l'une des revendications 1 à 7.

9. Dispositif pour surveiller une transmission de données entre au moins deux abonnés d'un réseau, comprenant au moins un émetteur et au moins un récepteur, l'émetteur transmettant des données à au moins un récepteur sous la forme de messages (SF, FF, CF), le dispositif étant configuré de telle sorte qu'une transmission de données est effectuée par au moins un message (SF) et le récepteur transmettant alors à l'émetteur au moins un bloc de contrôle de flux (FC) lorsque les données d'une transmission de données sont transmises séparément dans un premier message (FF) et au moins un message suivant (CF), **caractérisé en ce qu'**il contient des moyens par lesquels, après le dernier message (SF, LCF) d'une transmission de données, un bloc de contrôle de flux (FC) supplémentaire est transmis du récepteur vers l'émetteur pour confirmer cette transmission de données, une différence étant faite entre deux types de blocs de contrôle de flux, un premier bloc de contrôle de flux (FC.CTS) étant utilisé comme confirmation positive et un deuxième bloc de contrôle de flux (FC.WAIT) étant utilisé comme confirmation négative.
